# EUROPEAN PATENT SPECIFICATION

(11) **EP 3 647 004 B1**
(45) Date of publication and mention of the grant of the patent: **07.09.2022**
(21) Application number: 19207201.5
(22) Date of filing: 05.11.2019
(51) Int. Cl.: B27B 31/00, B25J 15/00, B25J 15/02, B25J 15/06, B27B 5/065

(54) **CUTTING MACHINE TO CUT PANELS MADE OF WOOD OR THE LIKE**
MASCHINE ZUM AUFTEILEN VON PLATTEN AUS HOLZ ODER DERGLEICHEN
MACHINE DE DÉCOUPAGE POUR DÉCOUPER DES PANNEAUX EN BOIS OU ANALOGUE

(30) Priority: 05.11.2018 IT 201800010039
(43) Date of publication of application: 06.05.2020
(73) Proprietor: BIESSE S.p.A., 61122 Pesaro (IT)
(72) Inventor: ANDREANI, Lorenzo, 61012 GRADARA (PU) (IT); CAMPANA, Marco, 61121 PESARO (PU) (IT); SALVIA, Massimo Paolo, 61122 PESARO (PU) (IT); SANTOLINI, Fernando, 61121 PESARO (PU) (IT)
(74) Representative: Manconi, Stefano

(56) References cited:
- EP-A1- 2 832 507

## Description

### CROSS-REFERENCE TO RELATED APPLICATIONS

This patent application claims priority from Italian patent application no. 102018000010039 filed on 05/11/2018.

### TECHNICAL FIELD

The present invention relates to a cutting machine to cut panels made of wood or the like, as per the preamble of claim 1.

### BACKGROUND ART

In the wood panel machining field, it is known to provide a cutting machine comprising a support frame defining a substantially horizontal support surface for at least one panel made of wood or the like; a cutting station; a main pusher to move at least one first panel in a first direction through the cutting station; a secondary pusher to move at least one second panel in the first direction through the cutting station; and a cutting device mounted in the cutting station to move in a second direction and along a cutting surface, which are perpendicular to the first direction so as to cut the panels.

The support surface is defined by a roller device mounted upstream of the cutting station, an output table mounted downstream of the cutting station, and a discharge trapdoor mounted between the roller device and the output table, downstream of the cutting surface, to discharge the swarf generated by the cutting device beneath the support surface.

The cutting machine also comprises an end-of-travel device, which is mounted in the area of the output table parallel to the first direction and has at least one end-of-travel member movable between a raised operating position, in which the end-of-travel member protrudes above the support surface, and a lowered rest position, in which the end-of-travel member extends below the support surface.

The cutting machine is further equipped with a robotic manipulator mounted downstream of the output table to collect the components separated from the panels by the cutting device and unload them from the cutting machine or feed them again to the main pusher and/or to the secondary pusher to perform further cuts.

The robotic manipulator comprises a base, a system of articulated arms that are connected to each other and to the base, and a gripping unit attached to the articulated arms.

The gripping unit comprises an elongated cross member, which is rotatably coupled to the telescopic arms and supports a pair of parallel gripping arms.

The gripping arms extend transversely to the cross member, are movable relative to one another along the cross member, and are provided with respective suction cups that can be connected to a pneumatic suction device.

Each gripping arm is also provided with a pushing device, which is movable along the gripping arm and comprises a pushing pin movable between an extracted operating position and a retracted rest position.

EP2832507 discloses a cutting machine as per the preamble of claim 1.

The known cutting machines of the type described above have some drawbacks mainly due to the fact that the robotic manipulator has a relatively low flexibility, since the two pushing devices are unable to correctly position the components against the end-of-travel device and move stacks of overlapping components on the support surface.

### DISCLOSURE OF INVENTION

The object of the present invention is to provide a cutting machine to cut panels made of wood or the like, which is free from the drawbacks described above and simple and inexpensive to implement.

According to the present invention, a cutting machine to cut panels made of wood or the like is provided as claimed in the appended claims.

### BRIEF DESCRIPTION OF THE DRAWINGS

The present invention will now be described with reference to the accompanying drawings, which illustrate a non-limiting embodiment thereof, wherein:
Figure 1 is a schematic perspective view, with parts removed for clarity, of a preferred embodiment of the cutting machine of the present invention;
Figure 2 is a schematic plan view, with parts removed for clarity, of the cutting machine in Figure 1;
Figure 3 is a schematic side view, with parts in section and parts removed for clarity, of the cutting machine in Figure 1;
Figures 4 and 5 are two schematic perspective views, on an enlarged scale and with parts removed for clarity, of a first detail of the cutting machine in Figure 1;
Figures 6, 7 and 8 are three schematic perspective views, with parts removed for clarity, of a second detail of the cutting machine in Figure 1;
Figure 9 is a schematic perspective view, with parts removed for clarity, of a third detail of the cutting machine in Figure 1; and
Figures 10 and 11 show schematically in plan and side elevation views, respectively, the principle of operation of the detail in Figure 9.

### BEST MODE FOR CARRYING OUT THE INVENTION

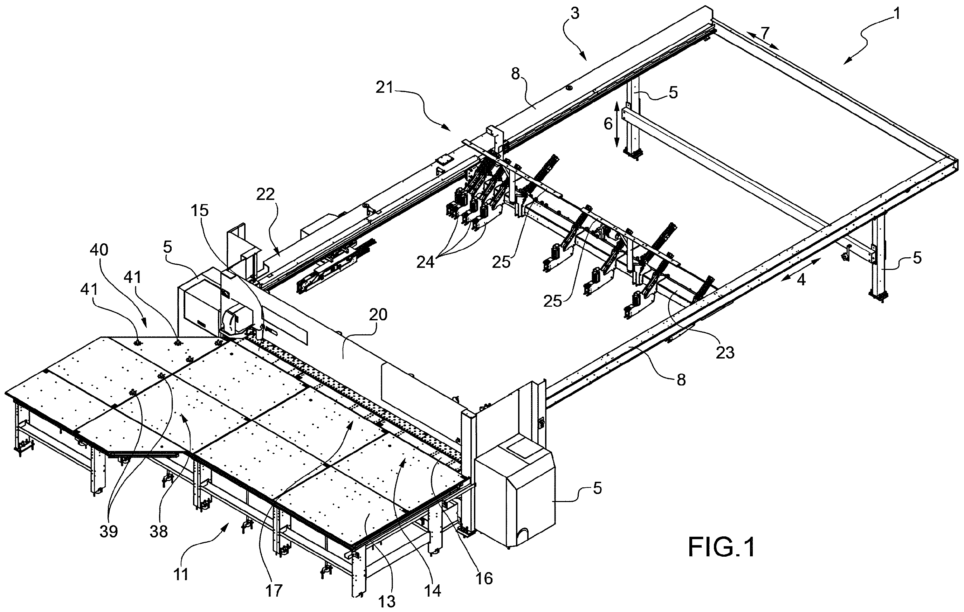

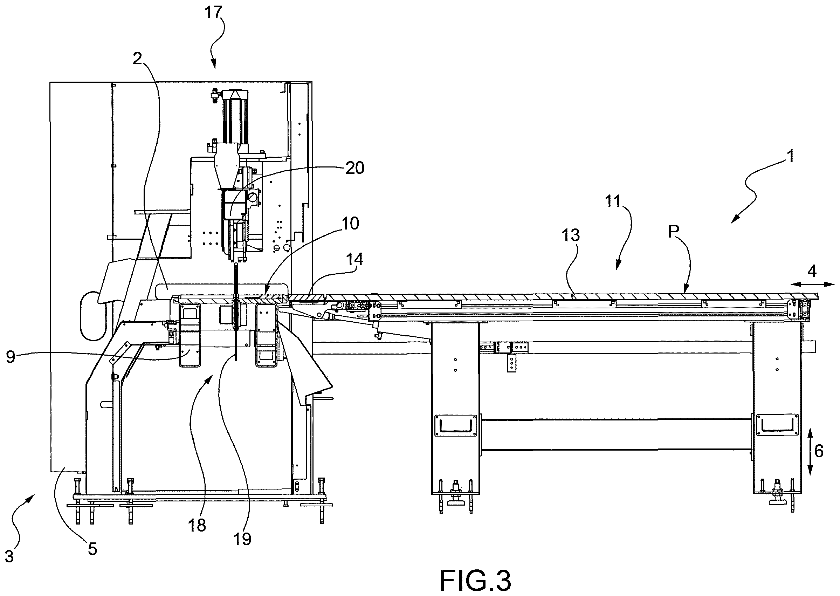

With reference to Figures 1, 2 and 3, number 1 indicates, as a whole, a cutting machine for cutting flat panels 2 made of wood or the like, substantially rectangular in shape.

The machine 1 comprises a portal frame 3, which substantially has the shape of a parallelepiped with a rectangular base, extends in a horizontal direction 4, and is provided with four vertical edges, each defined by a respective upright 5 parallel to a vertical direction 6 transverse to direction 4.

Each upright 5 is aligned with a corresponding upright 5 in direction 4 and with a corresponding upright 5 in a horizontal direction 7 orthogonal to directions 4 and 6.

The frame 3 also comprises two longitudinal guide members 8 parallel to each other, each of which extends in direction 4 and connects two corresponding uprights 5 to each other; a cross member 9, which extends in direction 7, is delimited by a flat upper face 10 perpendicular to direction 6, and connects two of the four uprights 5 to each other; and two support devices 11, which are arranged on opposite sides of the cross member 9 in direction 4, and define, together with the face 10, a substantially horizontal support surface P for the panels 2.

The device 11 upstream of the cross member 9 comprises a plurality of roller bars 12 parallel to each other and to direction 4, and the device 11 downstream of the cross member 9 comprises an output table 13.

The frame 3 is further provided with a discharge trapdoor 14 mounted between the cross member 9 and the table 13 to discharge the swarf generated by the cutting of the panels 2 beneath the surface P.

In this case, the trapdoor 14 comprises two support plates 15, 16, which are aligned with each other in direction 7, and are movable independently of one another, under the thrust of respective actuating devices (not shown), between respective raised closing positions, in which the plates 15, 16 are coplanar with the surface P, and respective lowered opening positions, in which the plates 15, 16 allow the swarf to fall below the surface P.

In this case, the plate 15 has a length, as measured parallel to direction 7, less than the length of the plate 16, also as measured parallel to direction 7.

The machine 1 also comprises a cutting station 17, which is formed next to the cross member 9 and the respective uprights 5, and is provided with a cutting assembly 18 of a known type coupled in a known manner to the cross member 9 so as to move rectilinearly in direction 7 relative to the frame 3 and under the thrust of a known, not shown actuating device.

The cutting assembly 18 has a blade 19 and an engraver (not shown) mounted so as to rotate about respective axes of rotation, which are parallel to each other and to direction 4, and to move rectilinearly in direction 6 between respective lowered rest positions, in which the blade 19 and the engraver (not shown) are arranged below the surface P to allow the panels 2 to be fed along the surface P, and respective raised operating positions, in which the blade 19 and the engraver (not shown) protrude through the cross member 9 above the surface P in order to cut the panels 2.

The blade 19 and the engraver (not shown) are also moved by the assembly 18 along a cutting surface T formed through the cross member 9 perpendicularly to direction 4 with alternating rectilinear motion comprising a forward stroke, in which the engraver (not shown), arranged in front of the blade 19 in the direction 7 of feeding of the assembly 18, engraves the panel 2 arranged on the surface P and the blade 19 cuts the panels 2, and a return stroke.

The assembly 18 cooperates with a pressure device 20 of a known type, which extends above the surface P in direction 7, and is movable, relative to the frame 3, in direction 6 between a raised rest position and a lowered operating position, in which the panels 2 are locked on the surface P and then cut by the assembly 18 parallel to direction 7.

The machine 1 also comprises a main pusher 21 and a secondary pusher 22, which are configured to feed the panels 2 along the surface P and through the station 17 back and forth in direction 4.

The main pusher 21 comprises a motorized carriage 23, which is mounted above the aforementioned roller bars 12, extends between the two longitudinal members 8 in direction 7, and is movable along the longitudinal members 8 in direction 4 under the thrust of a known, not shown actuating device.

The carriage 23 supports a plurality of gripping members 24, which are distributed along the carriage 23 in direction 7, and are movable along the carriage 23 in direction 7 during set-up of the pusher 21.

Each member 24 is also movable between a raised rest position and a lowered operating position and is shaped like tongs comprising a lower jaw and an upper jaw, which are movable relative to one another between a gripping position and a position of release of at least one panel 2.

The pusher 21 is also provided with two pushing bars 25 mounted along the carriage 23 in direction 7.

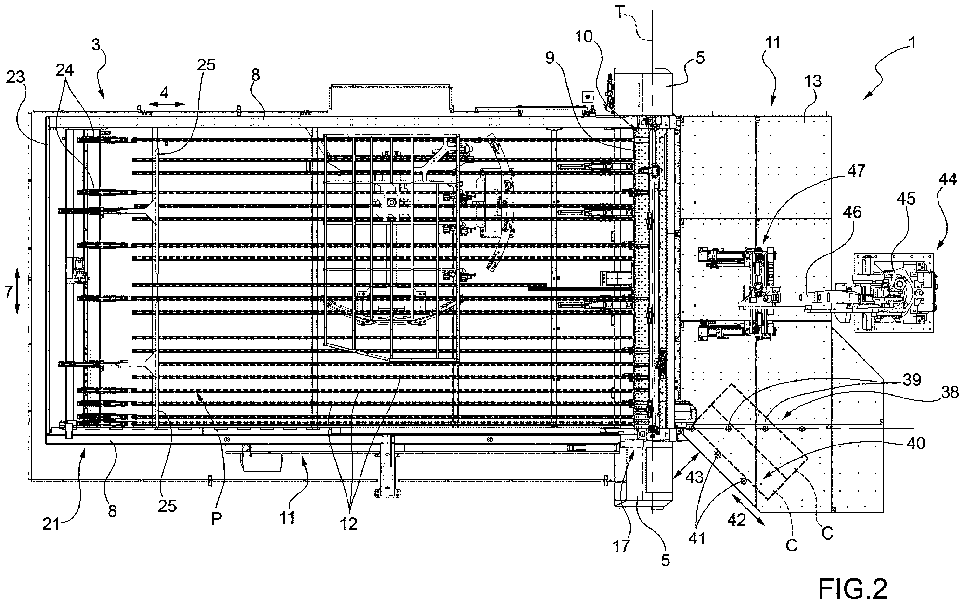

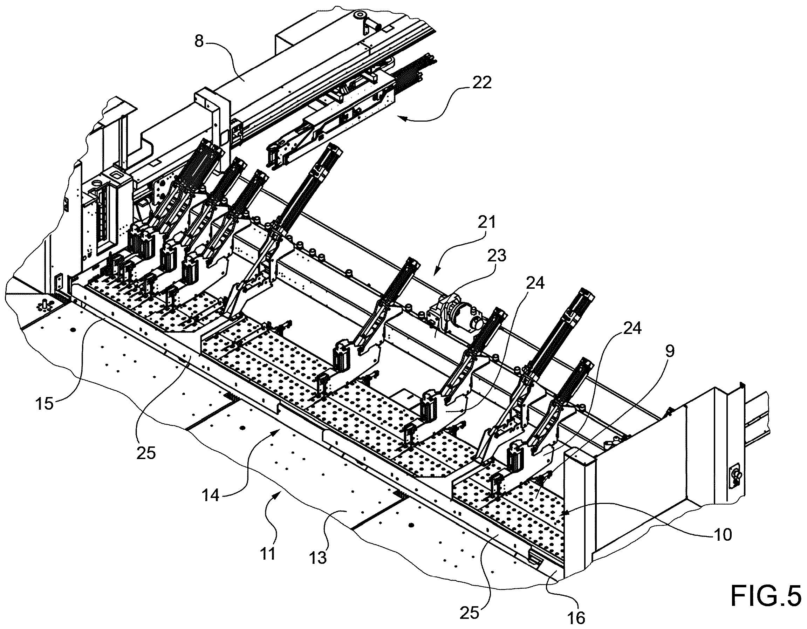

Each bar 25 is movable between a raised rest position (Figure 1), in which the bar 25 is arranged above the members 24, and a lowered operating position (Figure 5), in which the bar 25 is arranged in front of the members 24 in direction 4 so as to feed the components C (Figure 2) separated from the panels 2 by the blade 19 onto the table 13 and/or to push the swarf into the trapdoor 14.

With regard to the above, it should be pointed out that the uprights 5 associated with the station 17 laterally delimit in direction 7 a working area of the pusher 21 and the trapdoor 14.

The secondary pusher 22 comprises a motorized carriage 26, which extends beneath one of the longitudinal members 8 and is movable along the longitudinal member 8 in direction 4 under the thrust of a known, not shown actuating device.

The carriage 26 supports a first horizontal slide 27, which is slidably coupled to the carriage 26 so as to move relative to the carriage 26 in direction 7, and carries a gripping member 28 for at least one panel 2.

The member 28 has a substantially parallelepiped elongated shape, extends in direction 4, and is defined by tongs comprising a lower jaw 29 and an upper jaw 30, which are movable relative to one another between a gripping position and a position of release of at least one panel 2.

The member 28 is associated with a first pushing member 31, which has an elongated shape, extends in direction 4, and comprises two pushing arms 32 arranged on opposite sides of the member 28 in direction 7.

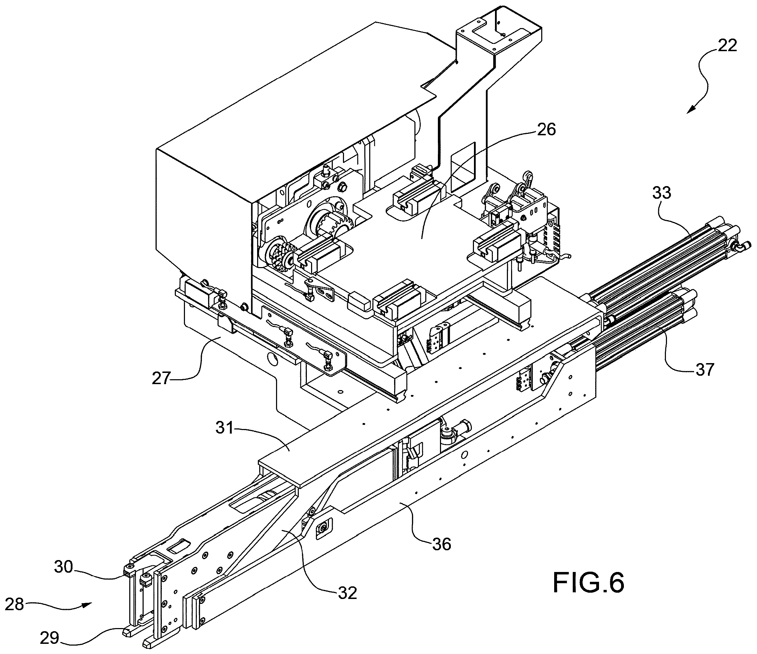

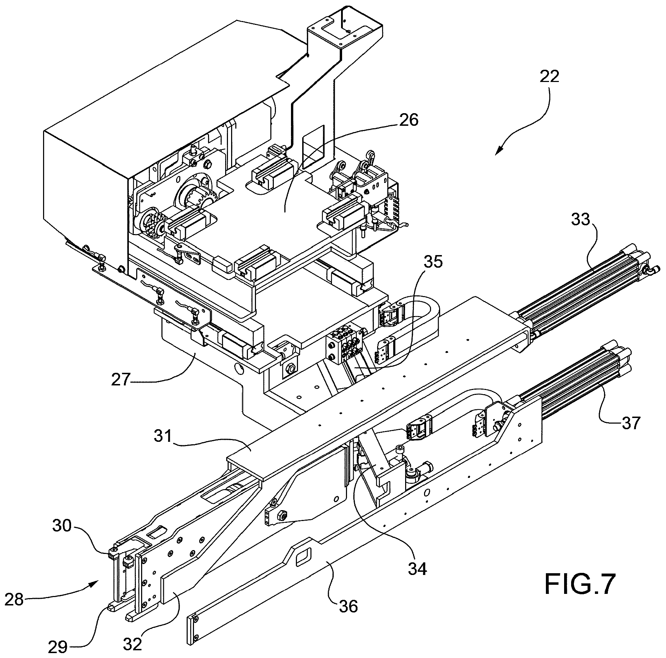

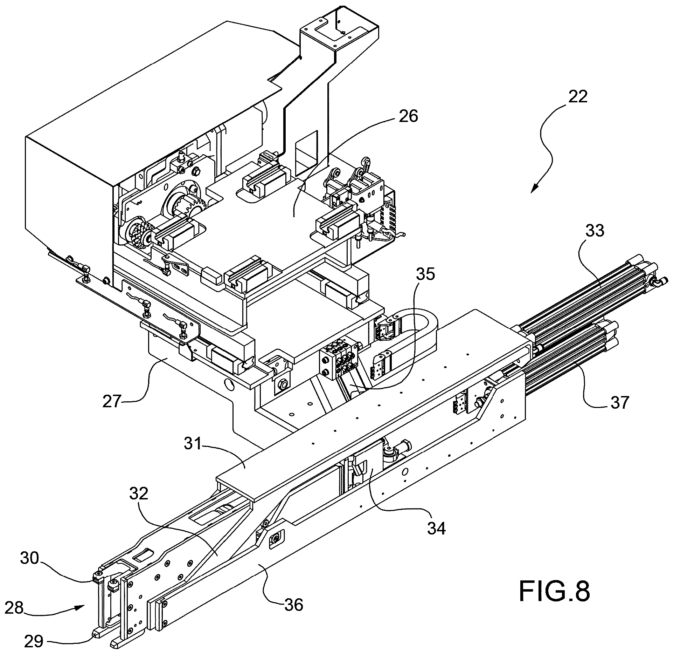

The member 31 is slidably coupled to the member 28 so as to move, relative to the member 28 and under the thrust of an actuator cylinder 33, in direction 4 between a retracted position (Figures 6 and 7), in which the member 28 projects from the member 31 in direction 4, and an extracted position (Figure 8), in which the arms 32 project from the member 28 in the same direction 4 so as to feed the components C separated from the panels 2 by the blade 19 onto the table 13 and/or to push the swarf into the trapdoor 14.

The pusher 22 also comprises a second horizontal slide 34 slidably coupled to the slide 27 so as to move, relative to the slide 27 and under the thrust of an actuator cylinder 35, in an inclined feed direction between the directions 4 and 7.

The slide 34 supports a second pushing member 36, which has an elongated flat shape, extends in direction 4 parallel to the member 28, and is moved by the cylinder 35 between a rest position (Figures 6 and 8) and an operating position (Figure 7), in which the member 36 moves away from the member 28 and cooperates with the member 28 in feeding the panels 2 along the frame 3 in direction 4.

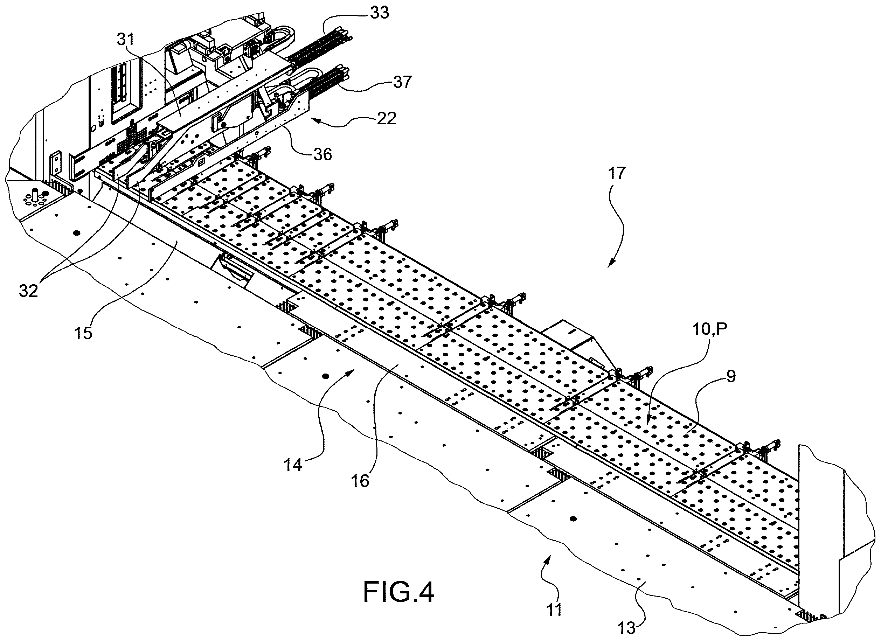

The member 36 is also slidably coupled to the slide 34 so as to move, relative to the slide 34 and under the thrust of an actuator cylinder 37, in direction 4 between a retracted position (Figures 6, 7 and 8), in which the member 28 projects from the member 36 in direction 4, and an extracted position (Figure 4), in which the member 36 projects from the member 28 in direction 4 and cooperates with the member 31 in feeding the components C separated from the panels 2 by the blade 19 onto the table 11 and/or in pushing the swarf into the trapdoor 14.

With regard to the above, it should be pointed out that the plate 15 is substantially aligned with the secondary pusher 22 in direction 4 and the plate 16 is substantially aligned with the main pusher 21 in the direction 4.

The table 13 is also provided with a first end-of-travel device 38 comprising a plurality of pin members 39, which are aligned with each other in direction 4 and are movable between respective raised positions, in which the members 39 project above the surface P, and respective lowered positions, in which the members 39 are at most coplanar with the surface P.

When arranged in their raised positions, the members 39 allow a correct positioning of the panels 2 in direction 7.

The table 13 is also provided with a second end-of-travel device 40 comprising a plurality of pin members 41, which are aligned with each other in a horizontal direction 42 inclined at angles different from 0° and 90° relative to directions 4 and 7, and are movable between respective raised positions, in which the members 41 project above the surface P, and respective lowered positions, in which the members 41 are at most coplanar with the surface P.

When arranged in their raised positions, the members 41 allow a correct positioning of the panels 2 in a horizontal direction 43 transverse to direction 42.

With regard to the foregoing, it should be pointed out that:
the device 40 extends outside of a working area of the main pusher 21 delimited in direction 7 by the uprights 5 of the cutting station 17 and having therefore a width, as measured parallel to direction 7, approximating by default a distance between the uprights 5 also measured parallel to direction 7; and
the member 39 facing the cutting plane T defines both part of the device 38 and part of the device 40.

The machine 1 is also provided with a robotic manipulator 44, which is arranged downstream of the table 13 in direction 4, and is configured to hold and move the components C separated from the panels 2 by the blade 19.

With reference to Figure 2, the manipulator 44 comprises a base 45, a system of articulated arms 46 that are connected to each other and to the base 45, and a gripping unit 47 attached to the arms 46.

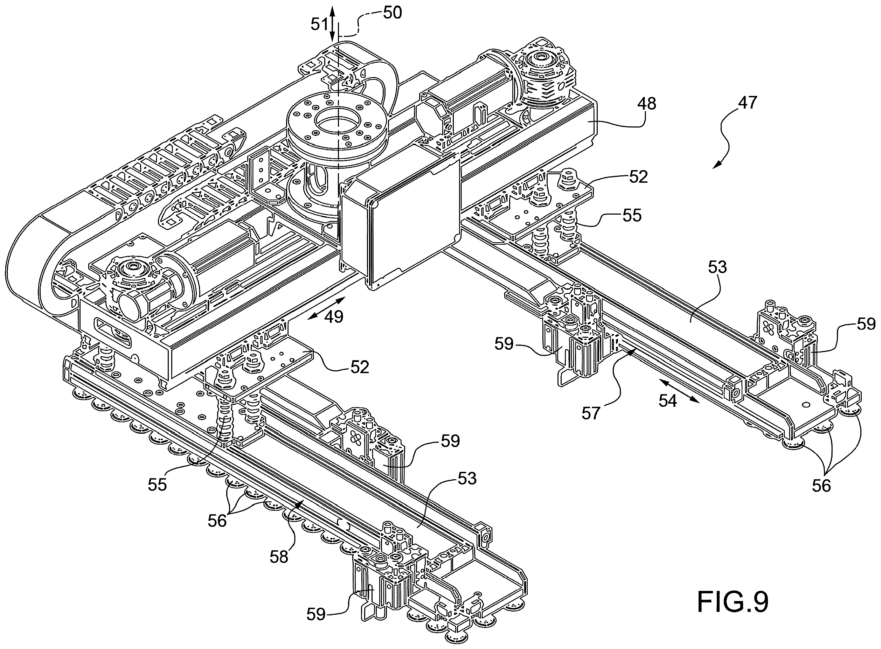

As shown in Figure 9, the unit 47 comprises, in turn, an elongated support cross member 48, which extends in a direction 49 and is rotatably coupled to the arms 46 so as to rotate, with respect to the arms 46, around a rotation axis 50 parallel to a direction 51 transverse to direction 49.

The orientation of the axis 50 depends on the position of the arms 46 and is preferably, but not necessarily, perpendicular to the surface P.

The unit 47 further comprises two slides 52 slidably coupled to the cross member 48 so that they can move relative to one another along the cross member 48 in direction 49, and two elongated arms 53, which extend in a direction 54 orthogonal to directions 49 and 51 and are mounted on the slides 52 through the interposition of respective shock absorber devices 55.

Each arm 53 extends on opposite sides of the cross member 48 in direction 54 and is provided with a plurality of suction cups 56, which are connected to a known, not shown, pneumatic suction device and are designed to hold an upper face of the component C or of a stack of overlapping components C.

Each arm 53 is further delimited by two opposite side faces 57, 58, with the face 57 facing the face 57 of the other arm 53.

Each face 57, 58 supports a respective pushing device 59, which is slidably coupled to the corresponding arm 53 to move rectilinearly along the corresponding arm 53 in direction 54 independently of the other devices 59.

According to a variant not according to the invention and not shown, the devices 59 mounted on the faces 57 are fixed in direction 54, and the devices 59 mounted on the faces 58 are movable in direction 54, or vice versa.

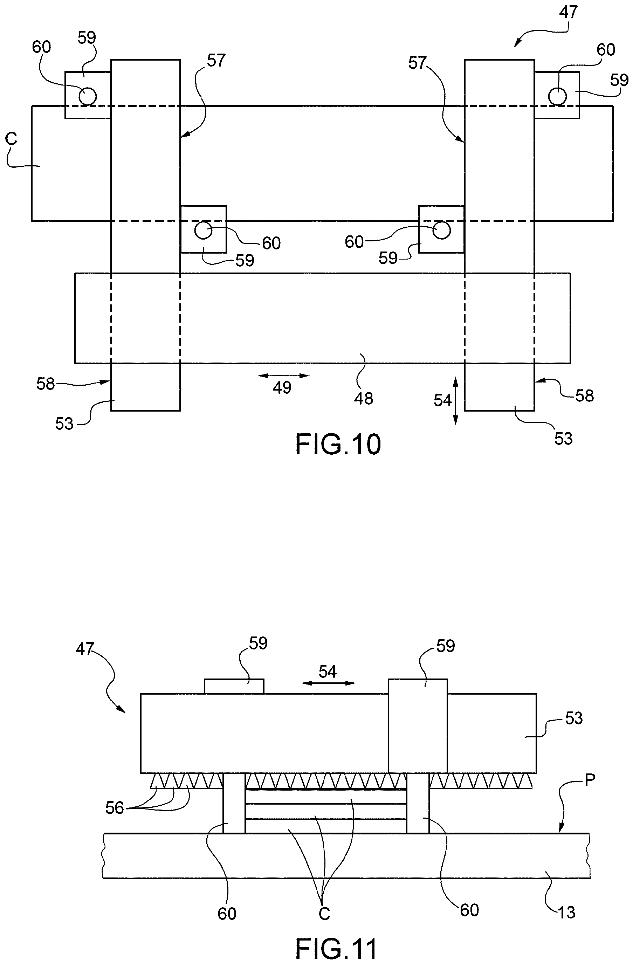

Each device 59 is provided with a pushing pin 60 (Figures 10 and 11), which is movable in direction 51 between a retracted rest position and at least one extracted operating position.

As illustrated in Figures 10 and 11, the simultaneous use of the four pushing devices 59 allows the manipulator 44 to correctly position each component C between the pins 60 in direction 54 and to feed it correctly to the main pusher 21 or the secondary pusher 22 or against the end-of-travel device 38 or the end-of-travel device 40.

In particular, the simultaneous use of the four pushing devices 59 allows the manipulator 44 to correctly position and feed a stack of overlapping components C, which are firstly positioned correctly between the pins 60 and then moved on the surface P by the manipulator 44 by combining the action of the suction cups 56 with the action of the pins 60.

With regard to the above, it should be pointed out that each pin 60 is selectively movable in a plurality of extracted operating positions as a function of a height of the component C or of the stack of components C.

According to a variant, not shown, each pin 60 is eliminated and replaced with a support element, which is L-shaped, comprises a support base for a component C or a stack of components C, and is mounted so as to rotate between an operating position, in which the support base is arranged under the component C or the stack of components C so as to allow the unit 47 to lift the component C or the stack of components C from the surface P, and a rest position, in which the support base disengages the component C or the stack of components C so as to allow the unit 47 to move the component C or the stack of components C on the surface P.

According to a further variant, not shown, each pin 60 is eliminated and replaced with a pin provided with a support base, which is movable between the aforementioned operating and rest positions.

The two plates 15, 16 of the trapdoor 14 allow the cutting assembly 18 to cut the panel 2 held by the main pusher 21, even when the plate 15 is arranged in its open position to discharge the swarf of the panel 2 held by the secondary pusher 22 beneath the surface P, and to cut the panel 2 held by the secondary pusher 22, even when the plate 16 is arranged in its open position to discharge the swarf of the panel 2 held by the main pusher 21 beneath the surface P.

The pushing members 31, 36 associated with the gripping member 28 allow the components C separated by the blade 19 from the panel 2 held by the secondary pusher 22 to be fed onto the table 13 and/or the swarf of the panel 2 held by the secondary pusher 22 to be unloaded into the trapdoor 14, thus avoiding the use of the pushing bars 25 and therefore of the main pusher 21. The end-of-travel device 40 allows the manipulator 44, unable to correctly position more than one component C against the end-of-travel device 38 in direction 7, firstly to correctly position at least two components C against the pin members 41 in direction 43, and therefore to correctly feed the two components C to the gripping members 24 of the main pusher 21 and to the gripping member 28 of the secondary pusher 22 parallel to direction 4 and/or to correctly position a single component C against the pin members 41 when the working area of the pusher 21 is occupied and prevents the positioning of the component C against the pin members 39.

## Claims

1. A cutting machine to cut panels (2) made of wood or the like, the machine comprising a cutting station (17); at least one pusher (21, 22) to move at least one panel (2) through the cutting station (17) in a first direction (4); a cutting assembly (18) mounted in the cutting station (17) and movable in a second direction (7) and along a cutting plane (T), which are substantially perpendicular to the first direction (4), so as to cut the panels (2); a support frame (3) defining a support surface (P) for the panels (2); and a robotic manipulator (44) to move, on the support surface (P), at least one panel (2) or at least one component (C) separated from the panel (2) by means of the cutting assembly (18), the robotic manipulator (44) having a gripping unit (47) comprising two support arms (53) parallel to one another, each provided with a first manipulator device (59) movable along the support arm (53); and being **characterized in that** each support arm (53) is further provided with a second manipulator device (59); said first and second manipulator devices (59) cooperating with one another so as to move at least one panel (2) or at least one component (C) on or above the support surface (P); the first manipulator device (59) and the second manipulator device (59) of each support arm (53) being movable relative to each other along the support arm (53).

2. The cutting machine according to claim 1, wherein each manipulator device (59) comprises a pushing pin (60), which is movable between at least one extracted operating position and a retracted rest position.

3. The cutting machine according to claim 2, wherein each pushing pin (60) is selectively movable to a plurality of extracted operating positions as a function of a thickness of the panel (2) or of the component (C) or as a function of a height of a stack of panels (2) or components (C) .

4. The cutting machine according to claim 1, wherein each manipulator device (59) comprises a support element, which is L-shaped and comprises a support base for at least one component (C) or at least one panel (2); the support base being movable between an operating position, in which the support base is arranged under the components (C) or the panels (2) so as to allow the gripping unit (47) to lift the components (C) or the panels (2) from the support surface (P), and a rest position, in which the support base disengages the components (C) or the panels (2) so as to allow the gripping unit (47) to move the components (C) or the panels (2) on the support surface (P).

5. The cutting machine according to any one of the preceding claims, wherein each support arm (53) is delimited by two opposite side faces (57, 58), each engaged by a respective manipulator device (59) in a sliding manner.

6. The cutting machine according to any one of the preceding claims, wherein each support arm (53) is further provided with a plurality of suction cups (56) to hold an upper face of the panel (2) or component (C) or an upper face of a stack of panels (2) or components (C).

7. The cutting machine according to any one of the preceding claims, wherein each second manipulator device (59) is movable along the respective support arm (53).

8. The cutting machine according to any one of the claims from 1 to 6, wherein each second manipulator device (59) is fixed to the respective support arm (53).

9. The cutting machine according to any one of the preceding claims, wherein the two support arms (53) are movable relative to one another in a moving direction (49), which is transverse to a moving direction (54) of the manipulator devices (59) along the support arms (53).

## Patentansprüche

1. Maschine zum Schneiden von Platten (2) aus Holz oder dergleichen, umfassend:
eine Schneidstation (17);
wenigstens ein Schieber (21, 22), um wenigstens eine Platte (2) durch die Schneidstation (17) in eine erste Richtung (4) zu bewegen;
eine Schneideinrichtung (18), angebracht in der Schneidstation (17) und bewegbar in eine zweite Richtung (7) und entlang einer Schneidebene (T), welche im Wesentlichen orthogonal zur ersten Richtung (4) sind, um die Platten (2) zu schneiden;
ein Stützrahmen (3), definierend eine Stützfläche (P) für die Platten (2);
und ein Manipulationsroboter (44) zum Bewegen wenigstens einer Platte (2) oder wenigstens einer mittels der Schneideinrichtung (18) von der Platte (2) separierten Komponente (C) auf der Stützfläche (P), aufweisend eine Greifeinheit (47), umfassend zwei zueinander parallele Stützarme (53),
welche jeweils eine entlang eines jeweiligen Stützarms (53) bewegbare erste Manipulationseinrichtung (59) aufweisen;
**dadurch gekennzeichnet, dass**
jeder der Stützarme (53) ferner mit einer zweiten Manipulationseinrichtung (59) ausgestattet ist;
besagte erste und zweite Manipulationseinrichtungen (59) miteinander kooperieren, um wenigstens eine Platte (2) oder wenigstens eine Komponente (C) auf oder über der Stützfläche (P) zu bewegen;
die erste Manipulationseinrichtung (59) und die zweite Manipulationseinrichtung (59) eines jeden Stützarms (53) relativ zueinander entlang des Stützarms (53) bewegbar sind.

2. Maschine nach Anspruch 1, wobei jede Manipulationseinrichtung (59) einen Druckstift (60) umfasst, welcher zwischen wenigstens einer ausgefahrenen Arbeitsstellung und einer eingefahrenen Ruhestellung bewegbar ist.

3. Maschine nach Anspruch 2, wobei jeder Druckstift (60) selektiv auf eine Vielzahl an ausgefahrenen Arbeitsstellungen bewegbar ist, als eine Funktion einer Dicke der Platte (2) oder der Komponente (C) oder als eine Funktion einer Höhe eines Stapels an Platten (2) oder Komponenten (C).

4. Maschine nach Anspruch 1, wobei jede der Manipulationseinrichtungen (59) ein Stützelement umfasst, welches L-förmig ist und eine Auflage für wenigstens eine Komponente (C) oder wenigstens eine Platte (2) aufweist; die Auflage ist bewegbar zwischen einer Arbeitsstellung, in welcher die Auflage derart unter den Komponenten (C) oder den Platten (2) angeordnet ist, dass die Greifeinheit (47) die Komponenten (C) oder die Platten (2) von der Stützfläche (P) anheben kann, und einer Ruhestellung, in welcher die Auflage die Komponenten (C) oder die Platten (2) freigibt, sodass es der Greifeinheit (47) ermöglicht wird die Komponenten (C) oder die Platten (2) auf der Stützfläche (P) zu bewegen.

5. Maschine nach einem der vorhergehenden Ansprüche, wobei jeder der Stützarme (53) durch zwei gegenüberliegende Seitenflächen (57, 58) begrenzt ist, welche jeweils durch eine respektive Manipulationseinrichtung (59) gleitend in Eingriff genommen werden.

6. Maschine nach einem der vorhergehenden Ansprüche, wobei jeder der Stützarme (53) ferner mit einer Vielzahl an Saugnäpfen (56) ausgestattet ist, um eine Oberseite der Platte (2) oder der Komponente (C) oder eine Oberseite eines Stapels von Platten (2) oder Komponenten (C) zu halten.

7. Maschine nach einem der vorhergehenden Ansprüche, wobei jede zweite Manipulationseinrichtung (59) entlang des jeweiligen Stützarms (53) bewegbar ist.

8. Maschine nach einem der Ansprüche 1 bis 6, wobei jede zweite Manipulationseinrichtung (59) am jeweiligen Stützarm (53) fixiert ist.

9. Maschine nach einem der vorhergehenden Ansprüche, wobei die beiden Stützarme (53) relativ zueinander in eine Bewegungsrichtung (49) bewegbar sind, welche quer zu einer Bewegungsrichtung (54) der Manipulationseinrichtungen (59) entlang der Stützarme (53) verläuft.

## Revendications

1. Machine de découpage pour couper des panneaux (2) en bois ou analogue, machine comprenant un poste de coupe (17) ; au moins un poussoir (21, 22) pour déplacer au moins un panneau (2) dans le poste de coupe (17) dans une première direction (4) ; un assemblage de coupe (18) dans le poste de coupe (17) et mobile dans une seconde direction (7) et le long d'un plan de coupe (T), qui sont pratiquement perpendiculaires à la première direction (4) de façon à couper les panneaux (2) ; un châssis de support (3) formant une surface de support (P) pour les panneaux (2) ; et un robot manipulateur (44) pour déplacer sur la surface de support (P), au moins un panneau (2) ou au moins un composant (C) séparé du panneau (2) à l'aide de l'assemblage de coupe (18),
le robot manipulateur (44) ayant une unité de prise (47) comportant deux bras de support (53) parallèles l'un à l'autre, chacun ayant un premier dispositif manipulateur (59) mobile le long du bras de support (53),
machine **caractérisée en ce que**
- chaque bras de support (53) comporte en outre un second dispositif manipulateur (59),
* le premier et le second dispositifs manipulateur (59) coopérant l'un avec l'autre pour déplacer au moins un panneau (2) ou au moins un composant (C) sur de la surface de support (P) ou au-dessus de celle-ci ;
* le premier dispositif manipulateur (59) et le second dispositif manipulateur (59) de chaque bras de support (53) étant mobiles l'un par rapport à l'autre le long du bras de support (53).

2. Machine de découpage selon la revendication 1,
dans laquelle
chaque dispositif manipulateur (59) comporte une broche de poussée (60) mobile entre au moins une position active développée et une position de repos rétractée.

3. Machine de découpage selon la revendication 2,
dans laquelle
chaque broche de poussée (60) est mobile sélectivement dans un ensemble de positions actives déployées en fonction de l'épaisseur du panneau (2) ou du composant (C) ou en fonction de la hauteur d'une pile de panneaux (2) ou de composants (C).

4. Machine de découpage selon la revendication 1,
dans laquelle
chaque dispositif manipulateur (59) comporte un élément de support en forme de L et ayant une base de support pour au moins un composant (C) ou au moins un panneau (2),
- la base de support étant mobile entre une position active dans laquelle la base de support est sous les composants (C) ou les panneaux (2) pour permettre à l'unité de prise (47) de soulever les composants (C) ou les panneaux (2) à partir de la surface de support (P) et une position de repos dans laquelle la base de support se dégage des composants (C) ou des panneaux (2) pour permettre à l'unité de prise (47) de déplacer les composants (C) ou les panneaux (2) sur la surface de support (P).

5. Machine de découpage selon l'une quelconque des revendications précédentes,
dans laquelle
chaque bras de support (53) est délimité par deux faces latérales opposées (57, 58), chacune étant prise glissante par un dispositif manipulateur (59) respectif.

6. Machine de découpage selon l'une quelconque des revendications précédentes,
dans laquelle
chaque bras de support (53) comporte en outre un ensemble de ventouses (56) pour se fixer à la face supérieure du panneau (2) ou du composant (C) ou à la face supérieure d'une pile de panneaux (2) ou de composants (C).

7. Machine de découpage selon l'une quelconque des revendications précédentes,
dans laquelle
chaque second dispositif manipulateur (59) est mobile le long du bras de support respectif (53).

8. Machine de découpage selon l'une quelconque des revendications précédentes 1 à 6,
dans laquelle
chaque second dispositif manipulateur (59) est fixé au bras de support (53) respectif.

9. Machine de découpage selon l'une quelconque des revendications précédentes,
dans laquelle
les deux bras de support (53) sont mobiles l'un par rapport à l'autre dans une direction de mouvement (49) qui est transversale à la direction de mouvement (54) des dispositifs manipulateurs (59) le long des bras de support (53).
